# EUROPEAN PATENT APPLICATION

(11) **EP 4 538 563 A1**
(43) Date of publication of application: **16.04.2025**
(21) Application number: 23819964.0
(22) Date of filing: 28.03.2023
(51) Int. Cl.: F16H 57/028, F16H 57/00, F16H 57/023, F16H 57/021, F16H 57/031, F16H 21/12, F16H 57/02

(54) **ORTHOGONAL-AXIS POWER TRANSMISSION DEVICE**

(30) Priority: 09.06.2022 KR 20220069934
(71) Applicant: Matinprout Co., Ltd., Seoul 06372 (KR)
(72) Inventor: LIM, Sun Ho, Asan-si Chungcheongnam-do 31533 (KR); RYU, Min Ho, Cheonan-si Chungcheongnam-do 31165 (KR)
(74) Representative: Patentanwälte Hemmer Lindfeld Frese Partnerschaft mbB
(86) International application number: PCT/KR2023/004070
(87) International publication number: WO 2023/239026

(57) **Abstract**

Provided is an orthogonal-axis power transmission device. The orthogonal-axis power transmission device according to an embodiment of the present inventive concept includes: a main structure assembly forming an exterior structure and having a space portion formed therein, the space portion being sealed; an input shaft assembly connected to one side of the main structure assembly, and to which rotational power of a motor is input; an output shaft assembly connected to the other side of the main structure assembly intersecting the input shaft assembly, and from which the rotational power of the motor is output; and a link assembly for changing a power transmission direction arranged to operate in the space portion of the main structure assembly to prevent propagation of noise or vibration, connected to the input shaft assembly and the output shaft assembly within the main structure assembly by a link method, and changing the power transmission direction from the input shaft assembly to the output shaft assembly.

## Description

### TECHNICAL FIELD

The present inventive concept relates to an orthogonal-axis power transmission device, and more particularly, to an orthogonal-axis power transmission device which may change a power transmission direction to an orthogonal axis while reducing noise and vibration, also have a compact structure that significantly reduces manufacturing costs compared to the related art, and furthermore enable manufacturing in a size suitable for an intended use so as to be widely applied to various industrial machines.

### BACKGROUND ART

Power transmission devices may be largely classified into a rack and pinion that changes a rotational motion to a linear motion or a linear motion to a rotational motion, and a gear train that changes a rotation speed and torque while transferring only a rotational motion. The power transmission device are widely used for various industrial machines including semiconductor equipment, flat display equipment such as LCD, PDP, or OLED, and the like.

Meanwhile, for power transmission devices that are already applied or prepared to be applied to various industrial machines, the power transmission direction is generally linear, that is, along a straight axis. A linear shaft power transmission device adopts a method of using a reducer directly connected to a motor, so although the installation height is somewhat large, the device has the advantage of a very simple structure. Therefore, the linear shaft power transmission device is widely used.

However, there are times when the power transmission direction needs to be changed to an orthogonal axis instead of the existing straight axis due to a small installation space or interference with surrounding structures or devices. As such, when the power transmission direction needs to be used in an orthogonal axis, it is common to use a bevel gear.

Nevertheless, the bevel gear is a type of gear that operates as two gears are directly meshed with each other at a 45-degree angle with friction, so noise and vibration caused by the frictional motion are bound to be severe. In order to reduce this noise and vibration, there is a problem that manufacturing costs inevitably increase because expensive, precisely manufactured bevel gears are used.

Furthermore, considering the fact that it is practically impossible to manufacture large bevel gears over a certain size, there is a problem that there are some limitations in changing the power transmission direction to an orthogonal axis using a bevel gear.

### DESCRIPTION OF EMBODIMENTS

### TECHNICAL PROBLEM

It is an objective of the present inventive concept to provide an orthogonal-axis power transmission device which may change a power transmission direction to an orthogonal axis while reducing noise and vibration, also have a compact structure that significantly reduces manufacturing costs compared to the related art, and furthermore enable manufacturing in a size suitable for an intended use so as to be widely applied to various industrial machines.

### ADVANTAGEOUS EFFECTS OF DISCLOSURE

According to the present inventive concept, a power transmission direction may be changed to an orthogonal axis with reduced noise and vibration and also due to a compact structure, manufacturing costs may be significantly reduced compared to the related art, and furthermore, manufacturing in a size suitable for an intended use may be possible, thereby enabling a wide application to various industrial machines.

### BRIEF DESCRIPTION OF DRAWINGS

- FIG. 1: is a perspective view of an orthogonal-axis power transmission device according to an embodiment of the present inventive concept.
- FIG. 2: is a side view of FIG. 1.
- FIG. 3: is a partially cut-away perspective view of FIG. 1.
- FIG. 4: is a cross-sectional view of FIG. 2.
- FIG. 5: is a partially cut-away perspective view of a main structure assembly.
- FIG. 6: is a partially exploded perspective view of the main structure assembly.
- FIG. 7: is a partially cut-away perspective view of an input shaft assembly.
- FIG. 8: is a partially exploded perspective view of the input shaft assembly.
- FIG. 9: is a partially cut-away perspective view of an output shaft assembly.
- FIG. 10: is a partially exploded perspective view of the output shaft assembly.
- FIG. 11: is a perspective view of a link assembly for changing a power transmission direction.
- FIG. 12: is an exploded perspective view of the link assembly for changing a power transmission direction.
- FIG. 13: is an enlarged perspective view of a main link member.
- FIG.14A to 14F: are views showing states of the link assembly for changing a power transmission direction rotated for each angle.
- FIG. 15: is a perspective view of a link assembly for changing a power transmission direction applied to an orthogonal-axis power transmission device according to another embodiment of the present inventive concept.

### BEST MODE

According to an aspect of the present inventive concept, an orthogonal-axis power transmission device includes: a main structure assembly forming an exterior structure and having a space portion formed therein, the space portion being sealed; an input shaft assembly connected to one side of the main structure assembly, and to which rotational power of a motor is input; an output shaft assembly connected to the other side of the main structure assembly intersecting the input shaft assembly, and from which the rotational power of the motor is output; and a link assembly for changing a power transmission direction arranged to operate in the space portion of the main structure assembly to prevent propagation of noise or vibration, connected to the input shaft assembly and the output shaft assembly within the main structure assembly by a link method, and changing the power transmission direction from the input shaft assembly to the output shaft assembly.

The link assembly for changing a power transmission direction may change the power transmission direction input from the input shaft assembly, by 90 degrees, and transmit an output to the output shaft assembly in one-to-one correspondence, the link assembly for changing a power transmission direction may include a main link member, an input shaft link member having one side connected to the input shaft assembly and the other side connected to one side of the main link member to be rotatable relative to each other, and an output shaft link member having one side connected to the output shaft assembly and the other side connected to the other side of the main link member to be rotatable relative to each other.

The link assembly for changing a power transmission direction further may include an input shaft connection portion connecting the main link member and the input shaft link member to be rotatable relative to each other, and an output shaft connection portion connecting the main link member and the output shaft link member to be rotatable relative to each other.

The input shaft connection portion may include an input shaft sub-link having one side connected to the input shaft link member and the other side connected to the main link member, a first input shaft bearing arranged in a connection area between the input shaft sub-link and the input shaft link member, an input shaft power transmission pin integrally connected to the input shaft link member, the input shaft sub-link, and the first input shaft bearing and transmitting power from a side of the input shaft link member to the input shaft sub-link, and a second input shaft bearing arranged in a connection area between the input shaft sub-link and the main link member.

The input shaft connection portion further may include a plurality of input shaft stop rings provided to fix a position of the input shaft sub-link or the input shaft power transmission pin.

The output shaft connection portion may include an output shaft sub-link having one side connected to the output shaft link member and the other side connected to the main link member, a first output shaft bearing arranged in a connection area between the output shaft sub-link and the output shaft link member, an output shaft power transmission pin integrally connected to the output shaft link member, the output shaft sub-link, and the first output shaft bearing and transmitting power from a side of the output shaft link member to the output shaft sub-link, and a second output shaft bearing arranged in a connection area between the output shaft sub-link and the main link member.

The output shaft connection portion further may include a plurality of output shaft stop rings provided to fix a position of the output shaft sub-link or the output shaft power transmission pin.

The input shaft connection portion and the output shaft connection portion have the same structure.

The main link member may include a disc type link body manufactured in a disc shape and in which first and second link connection portions, to which the input shaft link member and the output shaft link member are respectively connected, may be formed on both sides in opposite directions, at least one weight reducer formed in a center area of the disc type link body by passing therethrough, and reducing weight of the disc type link body, and at least one inertia moment balancer provided in side regions of the disc type link body adjacent to the input shaft link member and the output shaft link member to balance moment of inertia during a rotational motion of the disc type link body.

The main link member is an S-type link member in an S shape, and the input shaft link member and the output shaft link member are provided in the same shape as a Y-type link member in a Y shape.

The input shaft link member is key-coupled to the input shaft assembly by an input shaft key, and the output shaft link member is key-coupled to the output shaft assembly by an output shaft key.

The main structure assembly may include a structure body in which the space portion may be formed, and on one side of which an input shaft assembly connection portion, to which the input shaft assembly is connected, may be formed, a structure cover on which an output shaft assembly connection portion, to which the output shaft assembly is connected, is provided, the structure cover being connected to the structure body, and a plurality of structure cover fastening members detachably fastening the structure cover and the structure body.

The main structure assembly may include a structure cover O-ring arranged between the structure cover and the structure body and hermetically sealing between the structure cover and the structure body, a structure cover dowel pin arranged between the structure cover and the structure body and aligning a position of the structure cover with respect to the structure body, a front cover shielding one side front opening of the structure body, a plurality of front cover fastening members detachably fastening the front cover to the structure body, and a front cover O-ring arranged between the front cover and the structure body and hermetically sealing between the front cover and the structure body.

The input shaft assembly may include an input shaft structure connected to the one sides of the main structure assembly, a plurality of input shaft fixing bolts to fix the input shaft structure to the main structure assembly, an input shaft adapter rotated by the motor, having one side connected to the link assembly for changing a power transmission direction, and inputting the rotational power of the motor to the link assembly for changing a power transmission direction, an input shaft adapter bearing arranged in the input shaft structure and supporting a rotational motion of the input shaft adapter, and an input shaft adapter bearing preload plate forming a preload on the input shaft adapter bearing.

The input shaft assembly may include a motor installation plate on which the motor is mounted, a clamp fastening a motor shaft of the motor to the input shaft adapter, and a clamp tightening bolt tightening the clamp.

The output shaft assembly may include an output shaft structure connected to the other side of the main structure assembly, a plurality of output shaft fixing bolts fixing the output shaft structure to the main structure assembly, an output shaft adapter connected to the other side of the link assembly for changing a power transmission direction and outputting power transmitted from the link assembly for changing a power transmission direction, an output shaft adapter bearing arranged in the output shaft structure and supporting a rotational motion of the output shaft adapter, and an output shaft adapter bearing preload plate forming a preload on the output shaft adapter bearing.

### MODE OF DISCLOSURE

The attached drawings for illustrating preferred embodiments of the present inventive concept are referred to in order to gain a sufficient understanding of the present inventive concept, the merits thereof, and the objectives accomplished by the implementation of the present inventive concept.

Hereinafter, the present inventive concept will be described in detail by explaining preferred embodiments of the inventive concept with reference to the attached drawings. Like reference numerals in the drawings denote like elements.

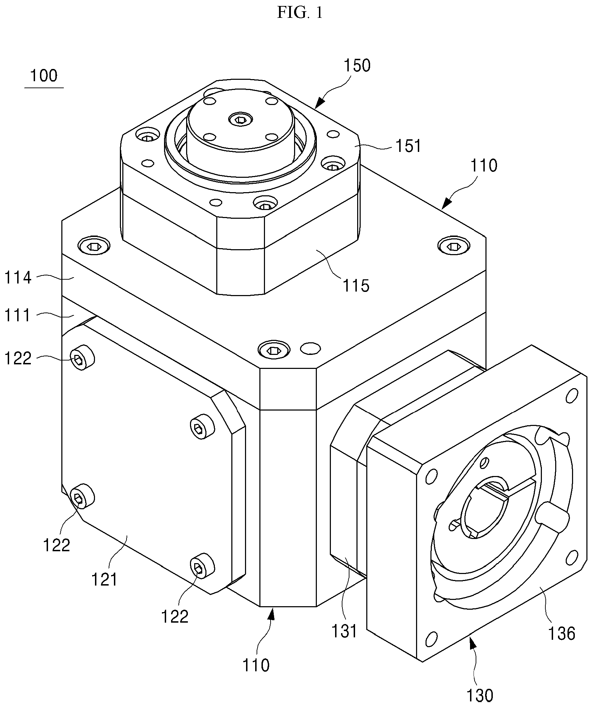

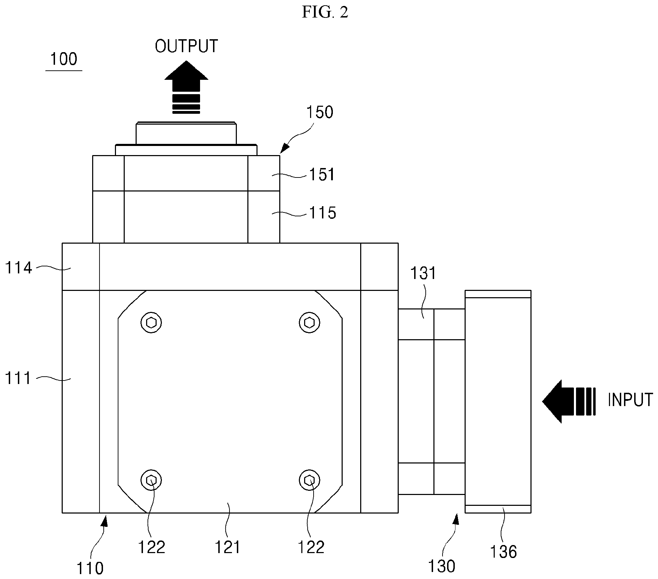

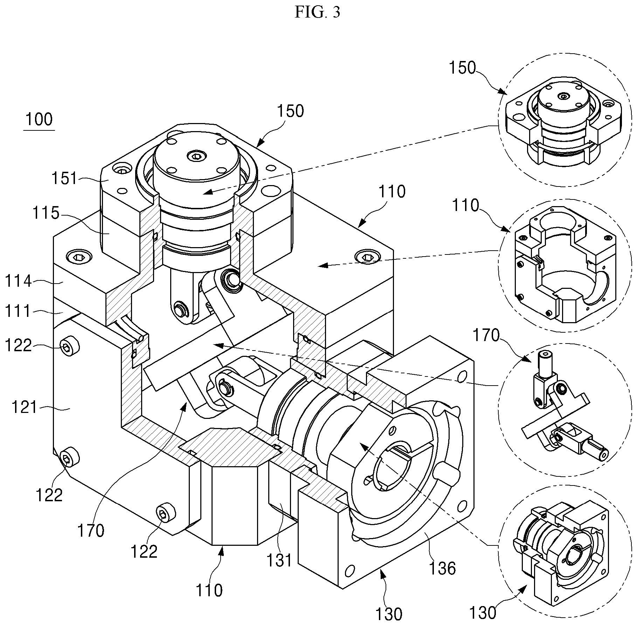

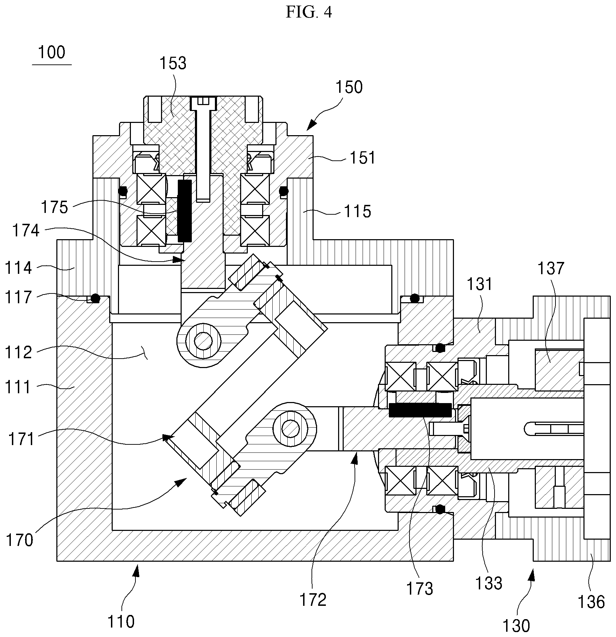

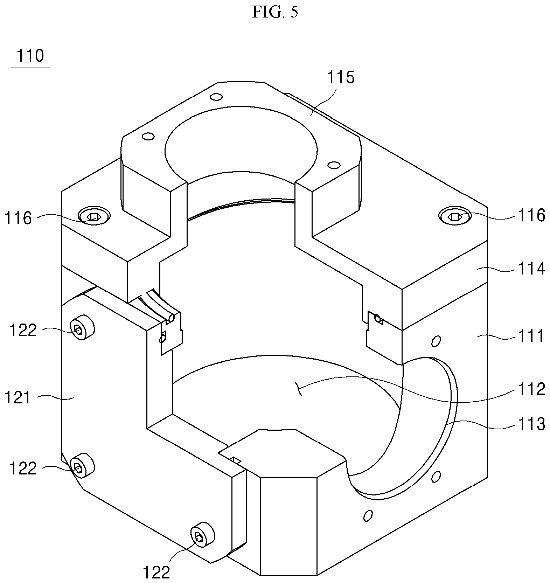

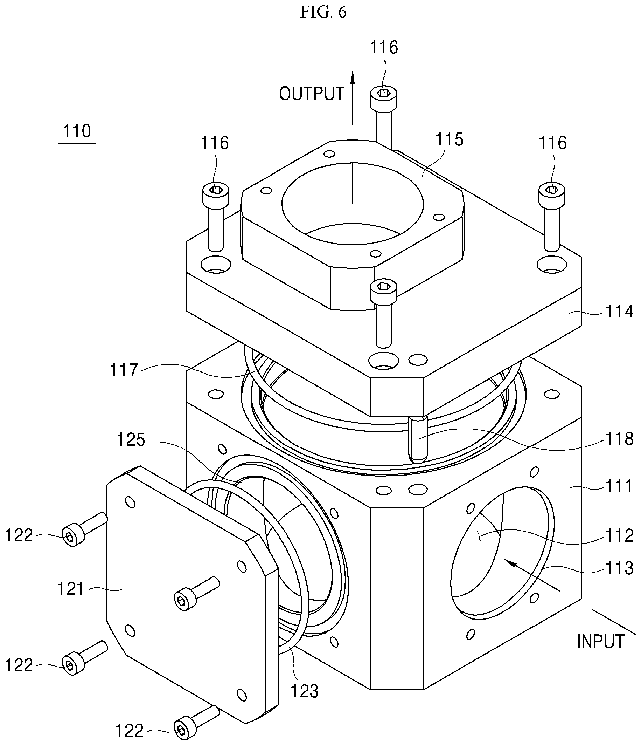

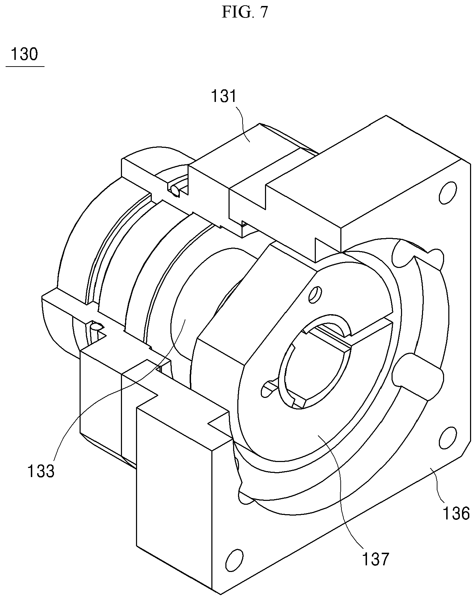

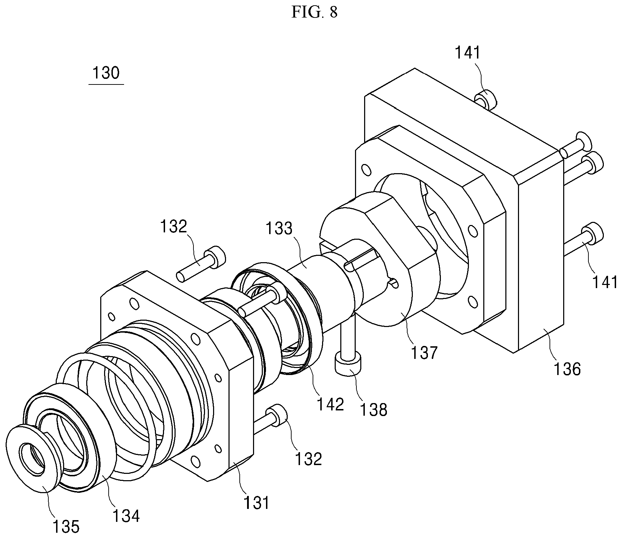

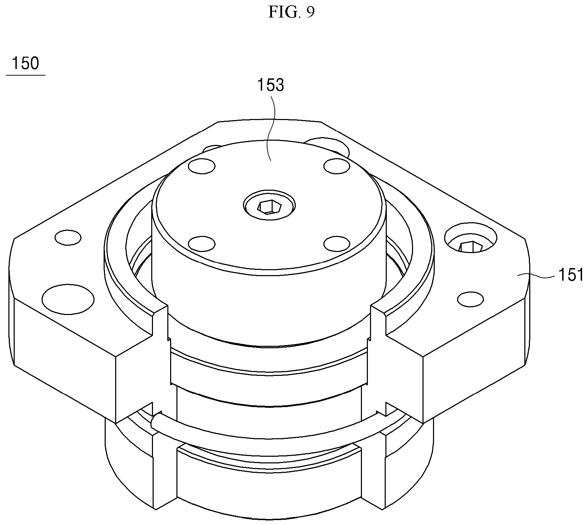

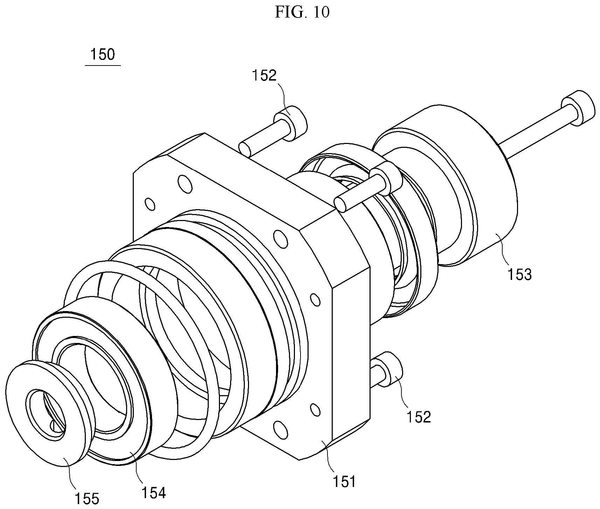

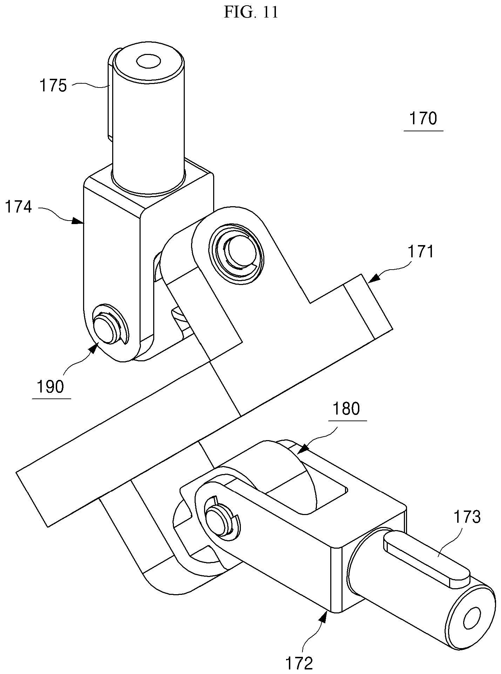

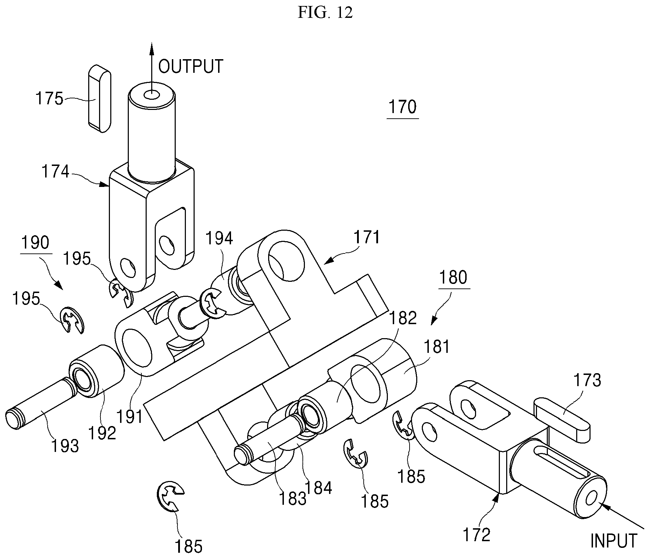

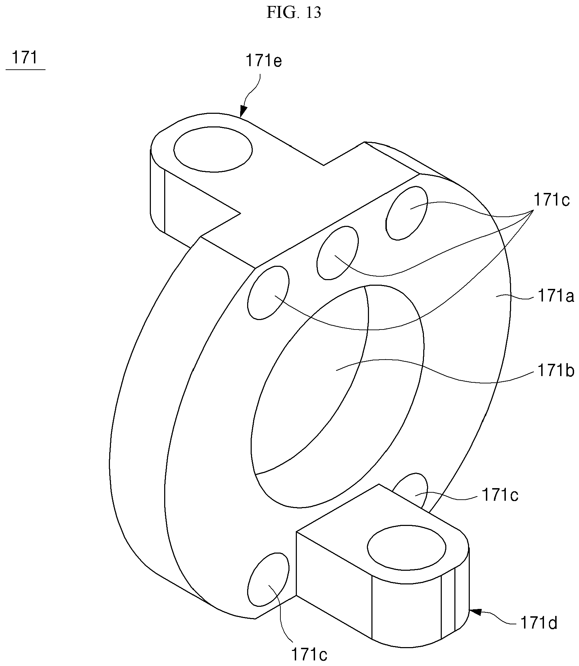

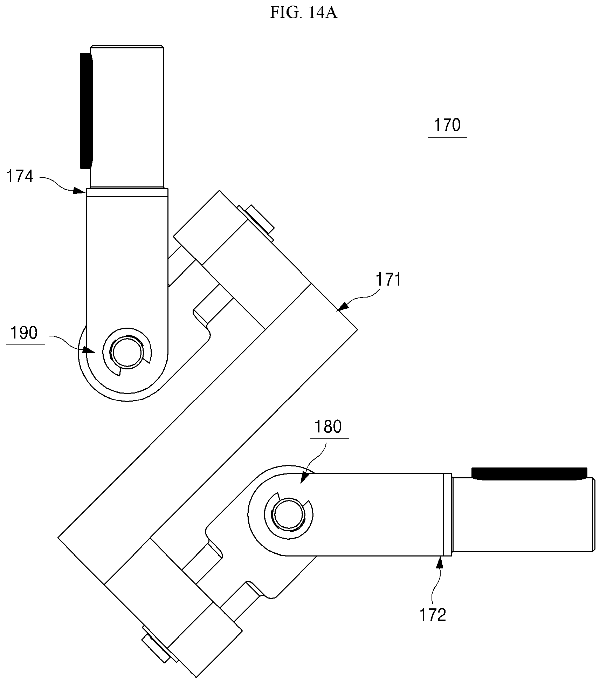

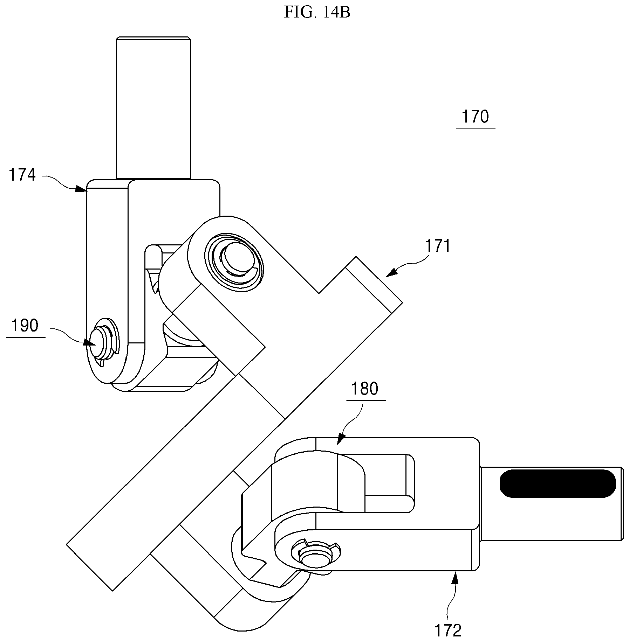

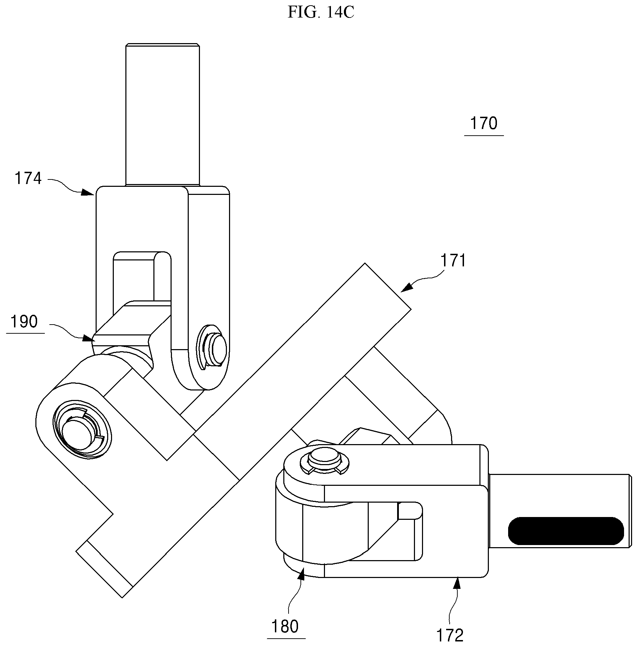

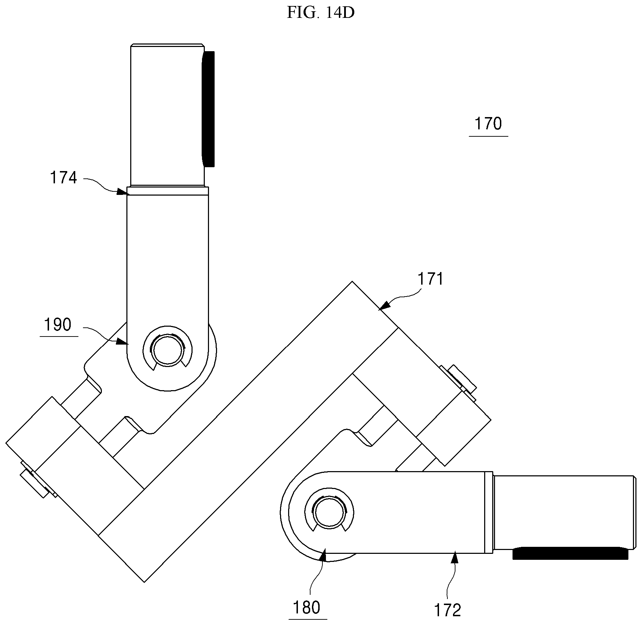

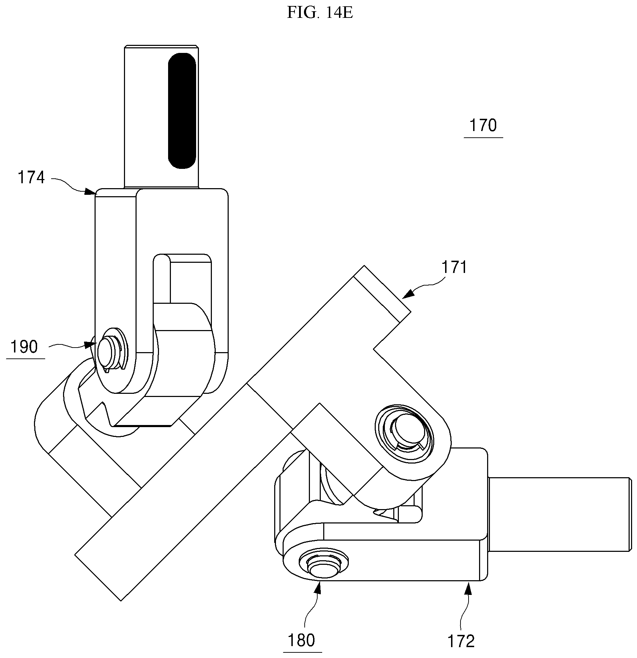

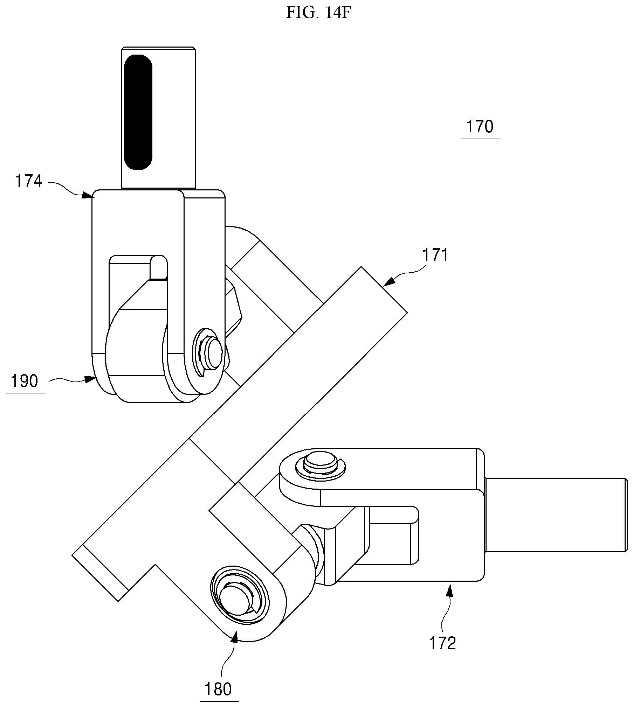

FIG. 1 is a perspective view of an orthogonal-axis power transmission device according to an embodiment of the present inventive concept. FIG. 2 is a side view of FIG. 1. FIG. 3 is a partially cut-away perspective view of FIG. 1. FIG. 4 is a cross-sectional view of FIG. 2. FIG. 5 is a partially cut-away perspective view of a main structure assembly. FIG. 6 is a partially exploded perspective view of the main structure assembly. FIG. 7 is a partially cut-away perspective view of an input shaft assembly. FIG. 8 is a partially exploded perspective view of the input shaft assembly. FIG. 9 is a partially cut-away perspective view of an output shaft assembly. FIG. 10 is a partially exploded perspective view of the output shaft assembly. FIG. 11 is a perspective view of a link assembly for changing a power transmission direction. FIG. 12 is an exploded perspective view of the link assembly for changing a power transmission direction. FIG. 13 is an enlarged perspective view of a main link member. FIGS. 14A to 14F are views showing states of the link assembly for changing a power transmission direction rotated for each angle.

Referring to the drawings, an orthogonal-axis power transmission device 100 according to an embodiment of the present inventive concept may change a power transmission direction to an orthogonal axis, as shown in FIG. 2, while reducing noise and vibration, also have a compact structure that significantly reduces manufacturing costs compared to the related art, and furthermore enable manufacturing in a size suitable for an intended use so as to be widely applied to various industrial machines.

The orthogonal-axis power transmission device 100 according to an embodiment of the present inventive concept, which may provide the above effects, may include a main structure assembly 110 forming an exterior structure, and have a structure in which an input shaft assembly 130, an output shaft assembly 150, and a link assembly 170 for changing a power transmission direction are coupled to the main structure assembly 110 for each position.

The main structure assembly 110 has a box structure forming an exterior structure as illustrated in FIGS. 1 to 6. The main structure assembly 110 has a space portion 112 therein which is sealed so that the link assembly 170 for changing a power transmission direction may be disposed.

As the link assembly 170 for changing a power transmission direction is disposed inside the space portion 112 that is sealed within the main structure assembly 110, and the link assembly 170 for changing a power transmission direction operates as illustrated in FIGS. 14A to 14F, in changing the power transmission direction to the orthogonal axis as illustrated in FIG. 2, noise and vibration may be significantly reduced compared to the related art.

The main structure assembly 110 may include a structure body 111 and a structure cover 114 which are disassembled and assembled from each other.

The structure body 111 has a box-shaped structure in which the space portion 112 is formed, and on one side of which an input shaft assembly connection portion 113, to which the input shaft assembly 130 is connected, is formed. The input shaft assembly connection portion 113 has a hole shape, and the input shaft assembly 130 is hermetically connected to the input shaft assembly connection portion 113.

An opening 125, which has a similar shape as the input shaft assembly connection portion 113 having a hole shape, is formed on one front side of the structure body 111, and a front cover 121 is provided to shield the opening 125 on the front side of the structure body 111.

The front cover 121 is fastened to a corresponding position by a front cover fastening member 122. In other words, the front cover fastening member 122 detachably fastens the front cover 121 to the structure body 111. As the front cover 121 is fastened by the front cover fastening member 122, the opening 125 in the front side of the structure body 111 may be shielded.

In this state, a front cover O-ring 123 is used between the front cover 121 and the structure body 111 to maintain the seal between the front cover 121 and the structure body 111. Accordingly, leakage of internal lubricant through the opening 125 in the front side of the structure body 111 may be prevented.

The structure cover 114 is a structure that is detachably connected to the structure body 111. A plurality of structure cover fastening members 116 are used for attachment and detachment of the structure cover 114. The structure cover fastening members 116 is a means for detachably fastening the structure cover 114 and the structure body 111. As such, as the structure cover 114 is detachable, the link assembly 170 for changing power transmission direction may be installed in the space portion 112 within the structure body 111, and furthermore, lubrication and maintenance and repair may be possible.

An output shaft assembly connection portion 115, to which the output shaft assembly 150 is connected, is provided on the structure cover 114. The output shaft assembly connection portion 115 has a protruding structure, unlike the input shaft assembly connection portion 113.

A structure cover O-ring 117 is arranged between the structure cover 114 and the structure body 111. The structure cover O-ring 117 is arranged between the structure cover 114 and the structure body 111 and hermetically seals between the structure cover 114 and the structure body 111. The structure cover O-ring 117 may prevent leakage of internal lubricant between the structure cover 114 and the structure body 111.

A structure cover dowel pin 118 is further arranged between the structure cover 114 and the structure body 111. The structure cover dowel pin 118 aligns the position of the structure cover 114 with respect to the structure body 111. Accordingly, the disassembly and assembly, especially assembly, of the structure cover 114 becomes easy.

As illustrated in FIGS. 1 to 4 and FIGS. 7 and 8, the input shaft assembly 130 is a part which is connected to one side of the main structure assembly 110 and to which rotational power of a motor (not shown) is input.

The input shaft assembly 130 may include an input shaft structure 131 connected to one side of the main structure assembly 110, and structures and components described below are connected by position through the input shaft structure 131.

A plurality of input shaft fixing bolts 132 are used to fix the input shaft structure 131. In other words, the input shaft fixing bolts 132 are means for fixing the input shaft structure 131 to the main structure assembly 110.

An input shaft adapter 133 is arranged within the input shaft structure 131. The input shaft adapter 133 is rotated by a motor and has one side connected to an input shaft link member 172 of the link assembly 170 for changing a power transmission direction, and inputs the power of the motor to the input shaft link member 172. The input shaft link member 172 is key-coupled to the input shaft adapter 133 of the input shaft assembly 130 by an input shaft key 173. Accordingly, the input shaft assembly 130 is prevented from spinning.

A clamp 137 for fastening a motor shaft of the motor to the input shaft adapter 133 is provided. The clamp 137 may be tightened by a clamp tightening bolt 138.

An input shaft adapter bearing 134 is arranged around the input shaft adapter 133. The input shaft adapter bearing 134 is arranged in the input shaft structure 131 and supports the rotational motion of the input shaft adapter 133. In other words, the input shaft adapter bearing 134 facilitates the rotational motion of the input shaft adapter 133.

An input shaft adapter bearing preload plate 135 is used to install the input shaft adapter bearing 134. The input shaft adapter bearing preload plate 135 is a means for forming a preload on the input shaft adapter bearing 134. In other words, the input shaft adapter bearing preload plate 135 increases bearing rotation precision by adjusting clearance of the input shaft adapter bearing 134 and also adjusts an assembly distance of the link assembly 170 for changing a power transmission direction.

A motor installation plate 136 is installed around the input shaft structure 131. The motor installation plate 136 is a part where the motor that is not shown is installed. The motor installation plate 136 is fixed to a corresponding position by a motor installation plate fixing bolt 141.

An input shaft oil seal 142 is provided in the input shaft assembly 130. The input shaft oil seal 142 may prevent leakage of internal lubricant through the input shaft assembly 130.

The output shaft assembly 150, as illustrated in FIGS. 1 to 4 and FIGS. 9 and 10, is a part which is connected to the other side of the main structure assembly 110 to intersect the input shaft assembly 130, and through which the rotational power of the motor is output. Excluding the installation structure of the motor, the output shaft assembly 150 has a structure similar to the input shaft assembly 130.

The output shaft assembly 150 may also include an output shaft structure 151 connected to the other side of the main structure assembly 110, and structures and components described below are connected by position through the output shaft structure 151.

A plurality of output shaft fixing bolts 152 are used for fixing the output shaft structure 151. In other words, the output shaft fixing bolts 152 are means to fix the output shaft structure 151 to the main structure assembly 110.

An output shaft adapter 153 is arranged within the output shaft structure 151. The output shaft adapter 153 is a means which is connected to the other side of the link assembly 170 for changing a power transmission direction, that is, an output shaft link member 174 of the link assembly 170 for changing a power transmission direction and outputs power transmitted from the link assembly 170 for changing a power transmission direction. Rotational power may be provided by connecting device via the output shaft adapter 153.

The output shaft link member 174 may be key-coupled to the output shaft adapter 153 of the output shaft assembly 150 by an output shaft key 175. Accordingly, the output shaft link member 174 is prevented from spinning.

An output shaft adapter bearing 154 for supporting the rotational motion of the output shaft adapter 153 is provided in the output shaft structure 151. An output shaft adapter bearing preload plate 155 for forming a preload on the output shaft adapter bearing 154 is installed to be connected to the output shaft adapter bearing 154. The output shaft adapter bearing preload plate 155 also provides the same function as the input shaft adapter bearing preload plate 135 described above. In other words, the output shaft adapter bearing preload plate 155 increases bearing rotation precision by adjusting clearance of the output shaft adapter bearing 154 and also adjusts an assembly distance of the link assembly 170 for changing a power transmission direction.

Meanwhile, the link assembly 170 for changing a power transmission direction, as illustrated in FIGS. 1 to 4 and FIGS. 11 and 12, is arranged in the space portion 112 of the main structure assembly 110 to prevent propagation of noise or vibration, operating as illustrated in FIGS. 14A to 14F, for example, is connected to the input shaft assembly 130 and the output shaft assembly 150 inside the main structure assembly 110 by a link method, and changes the power transmission direction from the input shaft assembly 130 to the output shaft assembly 150.

In particular, the link assembly 170 for changing a power transmission direction applied to the present embodiment changes the power transmission direction input from the input shaft assembly 130, by 90 degrees, and transmits an output to the output shaft assembly 150 in one-to-one correspondence.

A link structure provides less noise and vibration like the bevel gear according to the related art. Furthermore, the link assembly 170 for changing a power transmission direction applied to the present embodiment, which is arranged in the sealed space portion 112 of the main structure assembly 110 and then operates, noise and vibration may be prevented from being propagated to the outside. Furthermore, the structure of the link assembly 170 for changing a power transmission direction, which adopts the link structure, is simple so that manufacturing costs may be reduced, and furthermore, the link assembly 170 for changing a power transmission direction may be manufactured in a desired size, unlike the bevel gear.

The link assembly 170 for changing a power transmission direction may include a main link member 171, the input shaft link member 172 having one side connected to the input shaft assembly 130 and the other side connected to one side of the main link member 171 to be rotatable relative to each other, and the output shaft link member 174 having one side connected to the output shaft assembly 150 and the other side connected to the other side of the main link member 171 to be rotatable relative to each other.

The main link member 171, as a link in the center portion of the link assembly 170 for changing a power transmission direction, forms a place where the input shaft link member 172 and the output shaft link member 174 are connected to opposite end regions thereof.

In the present embodiment, the main link member 171 may include a disc type link body 171a in a disc shape, at least one weight reducer 171b formed in the center area of the disc type link body 171a by passing therethrough to reduce the weight of the disc type link body 171a, and at least one inertia moment balancer 171c provided in side regions of the disc type link body 171a adjacent to the input shaft link member 172 and the output shaft link member 174 to balance the moment of inertia during the rotational motion of the disc type link body 171a.

The disc type link body 171a has a circular outer shape except portions that contact the input shaft link member 172 and the output shaft link member 174. The disc type link body 171a serves as a flywheel to implement a smooth rotation with the input shaft link member 172 and the output shaft link member 174.

First and second link connection portions 171d and 171e, to which the input shaft link member 172 and the output shaft link member 174 are respectively connected, are formed on both sides of the disc type link body 171a. The first and second link connection portions 171d and 171e are provided in a protruding shape, and are arranged in the opposite directions on both sides of the disc type link body 171a.

The weight reducer 171b is formed in the center area of the disc type link body 171a to reduce the weight of the disc type link body 171a. In a case according to the present embodiment, the weight reducer 171b is formed in a circular through-hole shape.

The inertia moment balancer 171c is provided in the side regions of the disc type link body 171a and balances the moment of inertia during the rotational motion of the disc type link body 171a. In the present embodiment, the inertia moment balancer 171c is equally arranged in the side regions on both sides of the disc type link body 171a adjacent to the input shaft link member 172 and the output shaft link member 174. The inertia moment balancer 171c may also in the form of a hole.

The input shaft link member 172 and the output shaft link member 174 coupled to the opposite end regions of the main link member 171 are provided in the same shape as a Y-type link member in a Y shape.

The input shaft link member 172, as a Y-type link member, has one side connected to the input shaft assembly 130 and the other side connected to one side of the main link member 171 to be rotatable relative to each other. Furthermore, the output shaft link member 174, as a Y-type link member, has one side connected to the output shaft assembly 150 and the other side connected to the other side of the main link member 171 to be rotatable relative to each other.

In addition, the link assembly 170 for changing a power transmission direction may further include an input shaft connection portion 180 and an output shaft connection portion 190, as means for connecting the input shaft link member 172 and the output shaft link member 174 to the opposite end regions of the main link member 171 to be rotatable relative to each other. In the present embodiment, as the input shaft connection portion 180 and the output shaft connection portion 190 have the same structure, assembly and maintenance and repair become convenient. However, it is not necessary that the input shaft connection portion 180 and the output shaft connection portion 190 have the same structure, and thus, the scope of rights of the present inventive concept is not limited thereto.

First, the input shaft connection portion 180 is a means for connecting the main link member 171 and the input shaft link member 172 to be rotatable relative to each other, and includes various parts and units.

The input shaft connection portion 180 may include an input shaft sub-link 181 having one side connected to the input shaft link member 172 and the other side connected to the main link member 171, a first input shaft bearing 182 arranged in a connection area between the input shaft sub-link 181 and the input shaft link member 172, an input shaft power transmission pin 183 integrally connected to the input shaft link member 172, the input shaft sub-link 181, and the first input shaft bearing 182, and transmitting power from the side of the input shaft link member 172 to the input shaft sub-link 181, and a second input shaft bearing 184 arranged in a connection area between the input shaft sub-link 181 and the main link member 171.

One end portion of the input shaft sub-link 181 is inserted into an open portion of the input shaft link member 172 as a Y-type link member, and the other end portion thereof is coupled to a hole or opening formed in an end portion of the main link member 171 as an S-type link member. As the input shaft sub-link 181 connects between the input shaft link member 172 and the main link member 171 to be rotatable relative to each other, the first input shaft bearing 182 and the second input shaft bearing 184 are installed in both end portions of the input shaft sub-link 181 to induce smooth rotations. In particular, in a case of the first input shaft bearing 182, as one end portion of the input shaft sub-link 181 is inserted into the open portion of the input shaft link member 172, the input shaft power transmission pin 183 is further used in the first input shaft bearing 182.

A plurality of input shaft stop rings 185 are further used in the input shaft connection portion 180. The input shaft stop rings 185 are provided to fix the position of the input shaft sub-link 181 or the input shaft power transmission pin 183. The input shaft stop rings 185 are of E-shaped rings.

Next, the output shaft connection portion 190 is a means for connecting the main link member 171 and the output shaft link member 174 to be rotatable relative to each other. The output shaft connection portion 190 includes various parts and units.

The output shaft connection portion 190 has substantially the same structure, function, and role as the input shaft connection portion 180, except a location thereof. In other words, the output shaft connection portion 190 may include an output shaft sub-link 191 having one side connected to the output shaft link member 174 and the other side connected to the main link member 171, a first output shaft bearing 192 arranged in a connection area between the output shaft sub-link 191 and the output shaft link member 174, an output shaft power transmission pin 193 integrally connected to the output shaft link member 174, the output shaft sub-link 191, and the first output shaft bearing 192 and transmitting power from the side of the output shaft link member 174 to the output shaft sub-link 191, and a second output shaft bearing 194 arranged in a connection area between the output shaft sub-link 191 and the main link member 171.

A plurality of output shaft stop rings 195, as E-shaped rings, are further used in the output shaft connection portion 190. The output shaft stop rings 195 is provided to fix the position of the output shaft sub-link 191 or the output shaft power transmission pin 193.

Hereinafter, the operation of the orthogonal-axis power transmission device 100 according to an embodiment of the present inventive concept is described.

As described above, when the motor that is not shown is mounted on the input shaft assembly 130 and driven, the rotational power of the motor is input through the input shaft assembly 130, and then, while a power transmission direction is changed 90 degrees by the link assembly 170 for changing a power transmission direction, the rotational power may be transmitted through the output shaft assembly 150 in one-to-one correspondence. In other words, the power of the motor is output to the output shaft assembly 150 in one-to-one correspondence with only the direction thereof changed.

In this state, the state of the link assembly 170 for changing a power transmission direction being rotated by angle are as shown in FIGS. 14A to 14F. In other words, the states of the link assembly 170 for changing a power transmission direction being rotated by 0 degree, 60 degrees, 120 degrees, 180 degrees, 240 degrees, and 300 degrees are as shown in FIGS. 14A to 14F.

According to the present embodiment operating with the structure described above, an orthogonal-axis power transmission device may change a power transmission direction to the orthogonal axis while reducing noise and vibration, also have a compact structure that significantly reduces manufacturing costs compared to the related art, and furthermore enable manufacturing in a size suitable for an intended use so as to be widely applied to various industrial machines.

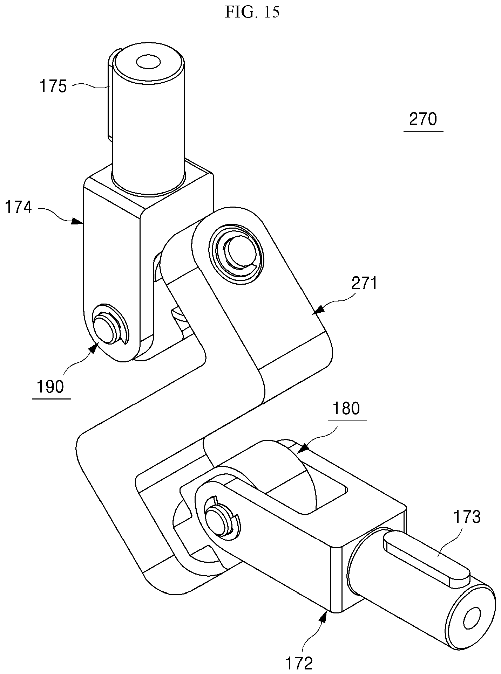

FIG. 15 is a perspective view of a link assembly for changing a power transmission direction applied to an orthogonal-axis power transmission device according to another embodiment of the present inventive concept.

Referring to the drawing, a link assembly 270 for changing a power transmission direction applied to the present embodiment may also include a main link member 271, the input shaft link member 172 having one side connected to the input shaft assembly 130 and the other side connected to one side of the main link member 271 to be rotatable relative to each other, and the output shaft link member 174 having one side connected to the output shaft assembly 150 and the other side connected to the other side of the main link member 271 to be rotatable relative to each other.

The structures, functions, and roles of the input shaft link member 172 and the output shaft link member 174 are the same as those of the embodiment described above. Accordingly, redundant descriptions thereof are omitted.

Meanwhile, the main link member 271 applied to the present embodiment, as a link in the center portion of the link assembly 270 for changing a power transmission direction, forms a place where the input shaft link member 172 and the output shaft link member 174 are connected to opposite end regions thereof. In the present embodiment, the main link member 271 is provided as an S-type link member in an S shape. Even when the main link member 271 is an S-type link member, the effects of the present inventive concept may be provided.

While this inventive concept has been particularly shown and described with reference to preferred embodiments thereof, it will be understood by those of ordinary skill in the art that various changes in form and details may be made therein without departing from the spirit and scope of the inventive concept as defined by the appended claims. Therefore, the scope of the inventive concept is defined not by the detailed description of the inventive concept but by the appended claims, and all differences within the scope will be construed as being included in the present inventive concept.

### INDUSTRIAL APPLICABILITY

The present inventive concept relates to various machine tools requiring a rotation motion or a linear motion, industrial machinery devices, semiconductor or flat display manufacturing equipment, various logistics transfer equipment, and the like.

## Claims

1. An orthogonal-axis power transmission device comprising:
a main structure assembly forming an exterior structure and having a space portion formed therein, the space portion being sealed an input shaft assembly connected to one side of the main structure assembly, and to which rotational power of a motor is input; an output shaft assembly connected to the other side of the main structure assembly intersecting the input shaft assembly, and from which the rotational power of the motor is output; and
a link assembly for changing a power transmission direction arranged to operate in the space portion of the main structure assembly to prevent propagation of noise or vibration, connected to the input shaft assembly and the output shaft assembly within the main structure assembly by a link method, and changing the power transmission direction from the input shaft assembly to the output shaft assembly.

2. The orthogonal-axis power transmission device of claim 1, wherein the link assembly for changing a power transmission direction changes the power transmission direction input from the input shaft assembly, by 90 degrees, and transmits an output to the output shaft assembly in one-to-one correspondence,
the link assembly for changing a power transmission direction comprises:
a main link member;
an input shaft link member having one side connected to the input shaft assembly and the other side connected to one side of the main link member to be rotatable relative to each other; and
an output shaft link member having one side connected to the output shaft assembly and the other side connected to the other side of the main link member to be rotatable relative to each other.

3. The orthogonal-axis power transmission device of claim 2, wherein the link assembly for changing a power transmission direction further comprises:
an input shaft connection portion connecting the main link member and the input shaft link member to be rotatable relative to each other; and
an output shaft connection portion connecting the main link member and the output shaft link member to be rotatable relative to each other.

4. The orthogonal-axis power transmission device of claim 3, wherein the input shaft connection portion comprises:
an input shaft sub-link having one side connected to the input shaft link member and the other side connected to the main link member;
a first input shaft bearing arranged in a connection area between the input shaft sub-link and the input shaft link member;
an input shaft power transmission pin integrally connected to the input shaft link member, the input shaft sub-link, and the first input shaft bearing and transmitting power from a side of the input shaft link member to the input shaft sub-link; and
a second input shaft bearing arranged in a connection area between the input shaft sub-link and the main link member.

5. The orthogonal-axis power transmission device of claim 4, wherein the input shaft connection portion further comprises a plurality of input shaft stop rings provided to fix a position of the input shaft sub-link or the input shaft power transmission pin.

6. The orthogonal-axis power transmission device of claim 3, wherein the output shaft connection portion comprises:
an output shaft sub-link having one side connected to the output shaft link member and the other side connected to the main link member;
a first output shaft bearing arranged in a connection area between the output shaft sub-link and the output shaft link member; an output shaft power transmission pin integrally connected to the output shaft link member, the output shaft sub-link, and the first output shaft bearing and transmitting power from a side of the output shaft link member to the output shaft sub-link; and
a second output shaft bearing arranged in a connection area between the output shaft sub-link and the main link member.

7. The orthogonal-axis power transmission device of claim 6, wherein the output shaft connection portion further comprises
a plurality of output shaft stop rings provided to fix a position of the output shaft sub-link or the output shaft power transmission pin.

8. The orthogonal-axis power transmission device of claim 3, wherein the input shaft connection portion and the output shaft connection portion have a same structure.

9. The orthogonal-axis power transmission device of claim 2, wherein the main link member comprises:
a disc type link body manufactured in a disc shape and in which first and second link connection portions, to which the input shaft link member and the output shaft link member are respectively connected, are formed on both sides in opposite directions;
at least one weight reducer formed in a center area of the disc type link body by passing therethrough, and reducing weight of the disc type link body; and
at least one inertia moment balancer provided in side regions of the disc type link body adjacent to the input shaft link member and the output shaft link member to balance moment of inertia during a rotational motion of the disc type link body.

10. The orthogonal-axis power transmission device of claim 2, wherein the main link member is an S-type link member in an S shape, and the input shaft link member and the output shaft link member are provided in a same shape as a Y-type link member in a Y shape.

11. The orthogonal-axis power transmission device of claim 2, wherein the input shaft link member is key-coupled to the input shaft assembly by an input shaft key, and
the output shaft link member is key-coupled to the output shaft assembly by an output shaft key.

12. The orthogonal-axis power transmission device of claim 1, wherein the main structure assembly comprises:
a structure body in which the space portion is formed, and on one side of which an input shaft assembly connection portion, to which the input shaft assembly is connected, is formed;
a structure cover on which an output shaft assembly connection portion, to which the output shaft assembly is connected, is provided, the structure cover being connected to the structure body; and
a plurality of structure cover fastening members detachably fastening the structure cover and the structure body.

13. The orthogonal-axis power transmission device of claim 12, wherein
the main structure assembly comprises:
a structure cover O-ring arranged between the structure cover and the structure body and hermetically sealing between the structure cover and the structure body;
a structure cover dowel pin arranged between the structure cover and the structure body and aligning a position of the structure cover with respect to the structure body;
a front cover shielding one side front opening of the structure body;
a plurality of front cover fastening members detachably fastening the front cover to the structure body; and
a front cover O-ring arranged between the front cover and the structure body and hermetically sealing between the front cover and the structure body.

14. The orthogonal-axis power transmission device of claim 1, wherein the input shaft assembly comprises:
an input shaft structure connected to the one sides of the main structure assembly;
a plurality of input shaft fixing bolts to fix the input shaft structure to the main structure assembly;
an input shaft adapter rotated by the motor, having one side connected to the link assembly for changing a power transmission direction, and inputting the rotational power of the motor to the link assembly for changing a power transmission direction;
an input shaft adapter bearing arranged in the input shaft structure and supporting a rotational motion of the input shaft adapter; and
an input shaft adapter bearing preload plate forming a preload on the input shaft adapter bearing.

15. The orthogonal-axis power transmission device of claim 14, wherein
the input shaft assembly comprises:
a motor installation plate on which the motor is mounted;
a clamp fastening a motor shaft of the motor to the input shaft adapter; and
a clamp tightening bolt tightening the clamp.

16. The orthogonal-axis power transmission device of claim 1, wherein the output shaft assembly comprises:
an output shaft structure connected to the other side of the main structure assembly;
a plurality of output shaft fixing bolts fixing the output shaft structure to the main structure assembly;
an output shaft adapter connected to the other side of the link assembly for changing a power transmission direction and outputting power transmitted from the link assembly for changing a power transmission direction;
an output shaft adapter bearing arranged in the output shaft structure and supporting a rotational motion of the output shaft adapter; and
an output shaft adapter bearing preload plate forming a preload on the output shaft adapter bearing.
